# EUROPEAN PATENT APPLICATION

(11) **EP 4 811 240 A1**
(43) Date of publication of application: **23.09.2026**
(21) Application number: 25164894.5
(22) Date of filing: 19.03.2025
(51) Int. Cl.: G06Q 10/08, G06Q 10/087, B65G 1/137

(54) **AUTOMATED STORAGE AND RETRIEVAL SYSTEM**

(71) Applicant: AutoStore Technology AS, 5578 Nedre Vats (NO)
(72) Inventor: HÖRNLUND, Staffan, 5578 Nedre Vats (NO)
(74) Representative: Kilburn & Strode LLP

(57) **Abstract**

The disclosure relates to an automated storage and retrieval system comprising a storage grid for storing one or more packages, a classifier system configured to classify the one or more packages based on their respective contents, and a conveying means for retrieving the one or more packages stored in the storage grid and delivering the one or more packages to the classifier system, and/or sending the one or more packages from the classifier system to the storage grid for storage in the storage grid.

## Description

### TECHNICAL FIELD

The disclosure relates to an automated storage and retrieval system. More particularly, it relates to an automated storage and retrieval system configured to classify and process packages, and a method of processing packages using an automated storage and retrieval system.

### BACKGROUN,

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

Automated storage and retrieval systems may be used on conjunction with other systems as part of a supply chain for the distribution of goods. For example, goods may be stored in the automated storage and retrieval system as part of an order fulfilment system, in which goods are retrieved from the grid, picked, packed and sent downstream in the supply chain to fulfil a customer order. Frequently however, a customer may wish to return their order for one of a number of reasons, such as due to faulty or incorrect goods, the goods are no longer needed, or the goods are no longer fit for purpose, among any number of other reasons.

Large numbers of returned orders can be overwhelming for supply chains that are designed for order fulfilment rather than processing returned goods. This is particularly the case for high-volume and fast-paced supply chains, such as Amazon, which use highly complex and largely automated systems to pick, pack, and deliver high volumes of orders in very short timeframes. When an order is returned, each order must be processed manually to check that the return can be accepted. This may involve opening the package to confirm that the returned package contains the correct goods, manually cross-referencing order numbers and customer details, and deciding on an order-by-order basis whether a number of potential other criteria are satisfied. A typical returns processing system can therefore be slow and resource intensive, both from a storage and human resource perspective, particularly when a large number of returns must all be processed at the same time.

One or more aspects of the invention of the present application are set out in the claims.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing the operations described herein;
Fig. 5 shows a schematic illustration of an automated storage and retrieval system according to an embodiment of the present disclosure; and
Fig. 6 shows a flowchart for a method according to an embodiment of the present disclosure.

### DETAILED DESCRIPTION

In overview, the disclosure relates to an automated storage and retrieval system comprising a storage grid and a classifier system. The storage grid is capable of storing one or more packages, such as boxes, packets, bags or any other means containing goods. The packages may be sealed so that the goods contained therein cannot be accessed. The classifier system is configured to classify the packages according to their contents, i.e., according to the goods contained therein. To do this, in some examples the classifier includes scanning means such as an x-ray, ultrasound, or any other suitable scanner that is capable of scanning a package to produce one or more image indicating the contents stored therein. The classifier may in some examples further include identifying means, such as an automated object recognition tool that identifies the contents of the package based on the scan. The automated storage and retrieval system may further include conveying means capable of retrieving one or more packages stored in the storage grid and delivering the one or more packages to the classifier system. Additionally or alternatively, the conveying means may be capable of transporting the one or more packages from the classifier system to the storage grid for storage in the storage grid.

The disclosed storage and retrieval system therefore provides an automated system for processing packages, such as packages that are part of a returns order. That is, packages that have been returned by a customer after receipt of the package by the customer. In particular, the storage system combined with the classifier provides temporary storage, otherwise known as buffer storage, for returned packages, mitigating the problems associated with handling high volumes of returned orders. Returned orders are typically classed as acceptable (i.e., the returned order can be processed and a refund provided to the customer) or unacceptable/rejectable (i.e., the returned order does not meet appropriate criteria, which may be specific to the retailer, and so further action is needed before the return can be processed and a refund provided to the customer). Typically, a manual inspection of the order by customer service operatives is required to determine whether the returned package is acceptable or not. This can be resource-intensive and an inefficient use of human resources, particularly when processing high volumes of returned orders. To alleviate this problem, the present disclosure provides a classifier configured to classify packages (e.g., as acceptable returns, unacceptable returns, or as packages that require further inspection) that is operably connected to the storage grid. As retuned packages are received by the automated storage and retrieval system, the packages can be sent for immediate classification by the classifier or temporarily stored in the storage grid prior to classification, dependent on the workload and availability of the classifier at the time. For instance, if a high volume of returned orders are received in a short time frame, the orders can be queued for classification and stored in buffer storage in the storage grid whilst they wait to be sent to the classifier at a suitable later time.

In addition to providing buffer storage for the automatic classification of packages, the storage grid can provide buffer storage for downstream processing of the packages after they have been classified. For example, after being classified by the classifier, packages may be returned to the storage grid for temporary storage before being sent downstream in the supply chain (e.g., a returns supply chain). In this way, the storage grid provides temporary buffer storage for high volumes of packages that await further processing, such as acceptable returns that are waiting to be collected and returned to a permanent storage warehouse (e.g. a separate automated storage and retrieval system), or unacceptable returns that are waiting to be collected by a customer service operative for manual processing. In addition, if the classifier is unable to classify any given package as an acceptable or unacceptable return, the classifier may flag that package for manual inspection by a customer service operative who can open the package to inspect its contents in order to determine whether the returns should be accepted or rejected. To optimise scheduling and use of the operative's time, packages that are flagged for manual inspection may also be temporarily stored in the storage grid, until such a time that the customer service operative is available to manually inspect multiple packages at once.

In general, the use of a storage grid in conjunction with a classifier as disclosed provides considerable efficiency gains in returns handling processes. These efficiency gains are achieved both by means of the automation of the classification using a suitable scanner and automated object identifying tool, which alleviates human resources for other tasks, and by means of the storage grid that can function as buffer storage for high volumes of packages awaiting classification or further downstream processing.

### Automated storage and retrieval system overview

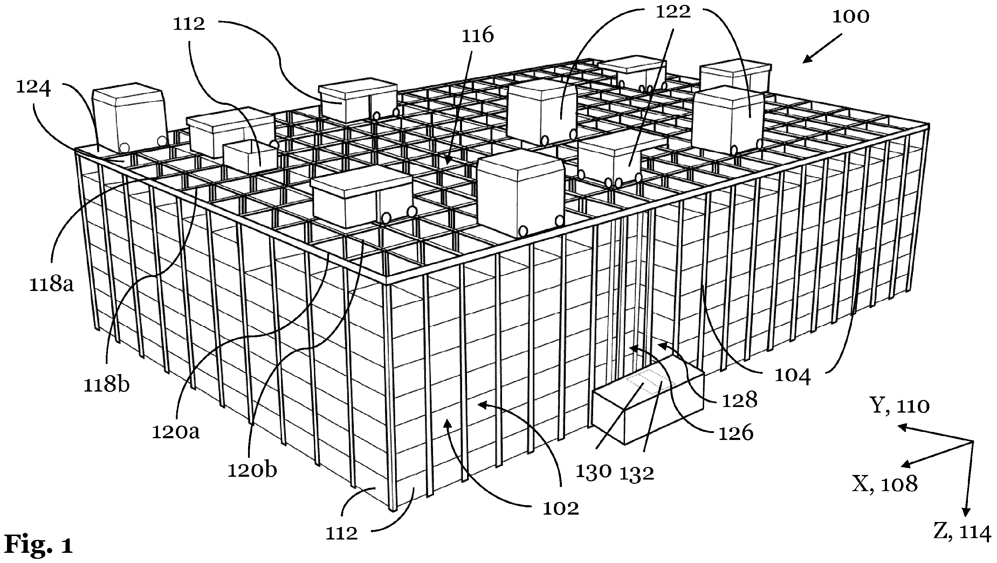

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off') and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

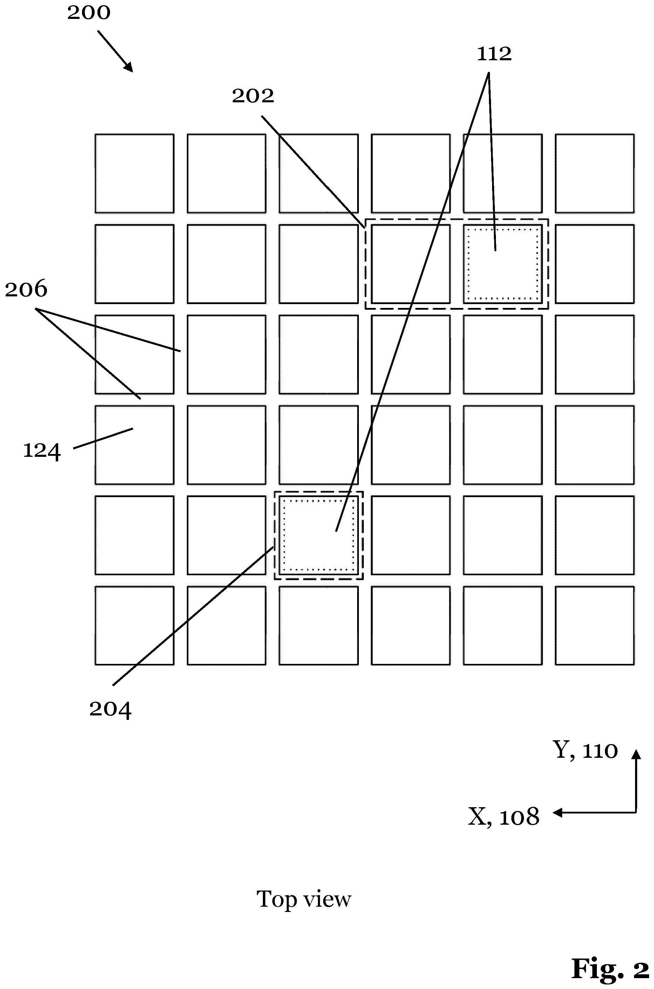

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

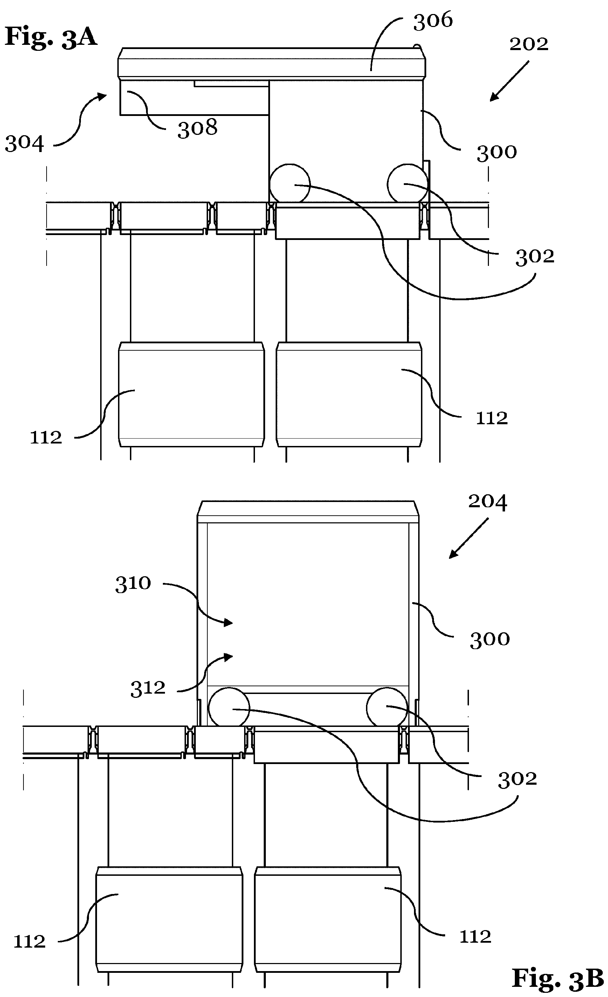

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

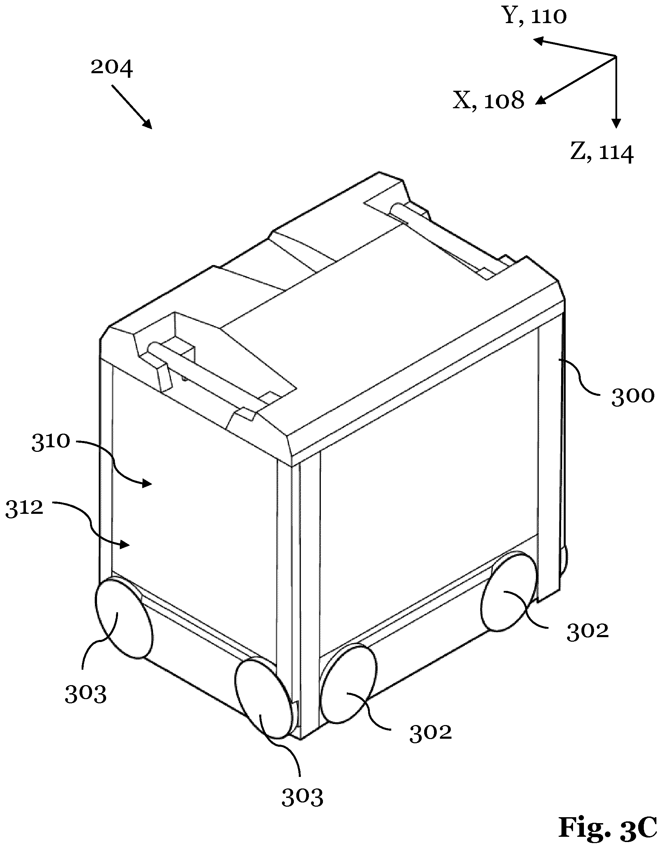

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

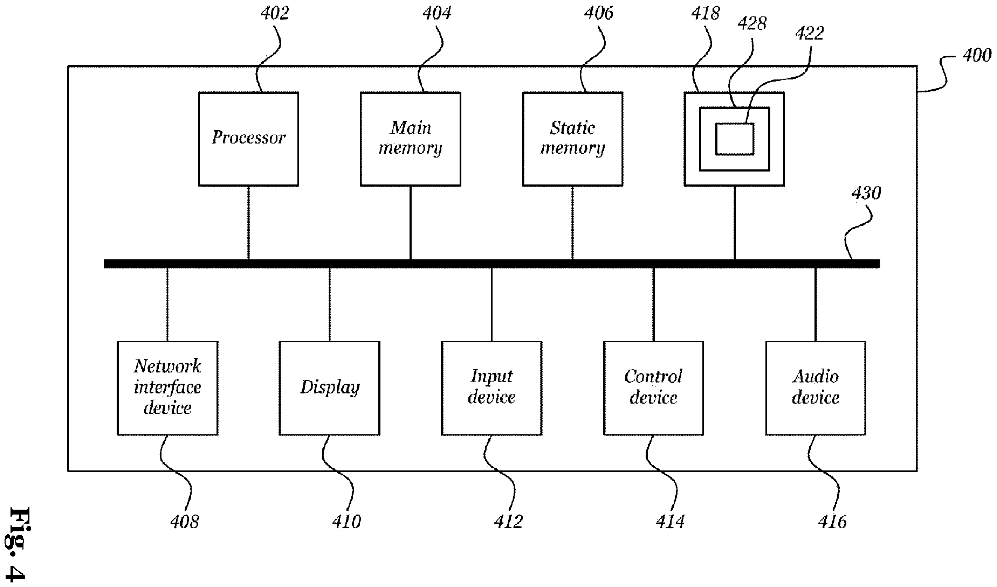

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which may be marked on the bin 112 using a computer-readable identifier (e.g., a barcode, quick-response code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

### Description of specific improvements

### Automated storage and retrieval system

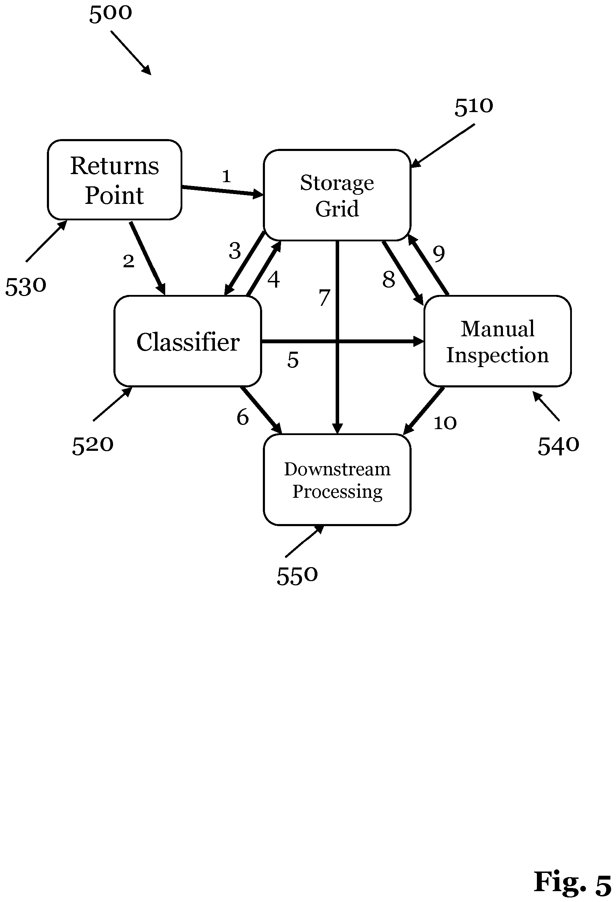

Referring now to Fig. 5, a schematic of an automated storage and retrieval system 500 according to an embodiment of the present disclosure is shown. The system 500 comprises a storage grid 510, which may be substantially similar to the storage grid 100 and its associated components (e.g. robots 122, ports 130, 132 and so on) shown in Fig. 1 and described above. The storage grid 510 is configured to receive (e.g., via one or more ports 130, 132) and store packages therein. The packages may be boxes, bags, packs, pallets or any other type of package that contains goods. The packages may be sealed so that the goods contained therein cannot be readily accessed without opening the package and inspecting its contents. The packages may be stored in the storage grid inside containers or bins 112 described above. The storage grid 510 may comprise means, such as robots 122, for retrieving packages from a storage location inside the grid and delivering the packages to a periphery of the storage grid, for example to a port 130, 132 or any suitable conveying means configured to carry the packages towards and/or away from the grid.

The system 500 further comprises a classifier 520 operably connected to the storage grid. For example, the system 500 may comprise a transport means (not explicitly shown in Fig. 5) capable of transporting packages between the storage grid 510 and the classifier 520, such as a conveyor, a network of conveyors, or any other suitable means capable of carrying packages between the storage grid 510 and the classifier 520. The transporting means may be referred to as a conveying means herein. The classifier 520 is configured to classify packages based on their contents, for example without opening the package or inspecting the goods stored therein. Instead, in some examples, the classifier comprises a scanner configured to scan the package and identifying means configured to identify the contents of the package based on the scan. After identifying the contents of the package, the classifier 520 can assign one or more classes to the package based on the identified contents.

In more detail, the classifier 520 may comprise a scanner, such as an x-ray scanner, ultrasound scanner, or any other suitable scanner that is capable of producing scan images that indicate the contents of a package. In some examples, the scanner may comprise a conveyor configured to carry a package into a scanning chamber, whereby the package is scanned to produce one or more x-ray, ultrasound, or similar, images of the package that depict the goods contained therein.

The classifier 520 may further comprise suitable identifying means configured to identify the contents of a scanned package based on the one or more images produced by the scanner. For example, the identifying means may include an object recognition tool configured to receive as input one or more images and provide as output details of the contents (e.g., the number and types of goods) contained within the package. The object recognition tool may employ a machine learning algorithm or neural network that has been trained to identify objects from scan images of the packages produced by the scanner. In general, the identifying means may include any suitable tool, automated or otherwise, that is apparent to the skilled person and which can identify the contents of a package.

As mentioned above, the classifier 520 is configured to classify a package based on its contents. In more detail, the identifying means provides details of the objects identified within the package, therefore indicating whether the package contains the expected goods (e.g., corresponding to an order number associated with the package), or more generally whether the contents of the package meets certain criteria in order to be classified as an accepted return. For example, the classifier 520 may cross check order information from an order database with the details provided by the object recognition tool to determine whether the goods identified from the scan correspond to the order details, and optionally whether the goods meet other criteria (such as any one of more of: the goods are not damaged; that the package contains the right quantity of goods; and that the package has been received within a predetermined timeframe). The criteria may vary and may be specific to individual retailers. If the goods meet the requisite criteria, the package may be assigned a class indicating that the returns are accepted. Otherwise, (e.g., if one or more requisite criteria are not met, such as the package contains the wrong goods, or is missing goods (it is incomplete), or the goods are damaged, or the package has been received too late), the package may be assigned a class indicating that the returns are rejected. In the event that the package is classified as unaccepted, or in the event that the classifier 520 is unable to conclusively determine whether to accept or reject the package, the package may be assigned a class indicating it requires manual inspection. The package may then be sent immediately to a manual inspection station 540 for manual inspection, or the package may be returned to the grid for temporary storage, until such a time when all packages flagged for manual inspection can be retrieved for inspection (e.g. a scheduled time or when an customer service operative is available to carry out the inspection).

In some embodiments, the system 500 comprises a returns point 530 for receiving packages. The returns point 530 may be operably connected to one or both of the storage grid 510 and the classifier 520, so that packages received at the returns point can be transported by any suitable conveying means to the classifier 520 for classification of the package, or to the storage grid 510 for temporary storage prior to classification. In general, the returns point 530 may be accessible to customers who are returning a package as part of a returned order. For example, the returns point may take the form of a port 130, 132 such as those described above with reference to Fig. 1. The returns point may be operated by a customer service operator who receives the package and forwards the package via the conveying means to the storage grid 510 or the classifier 520. In some examples, the returns point may be any suitable means for receiving a package, from a customer or otherwise, for that package to be forwarded to the other components of the system 500.

In one particular example, the returns point may be any suitable port located at the periphery of the storage grid, such as a port 130, 132 as described above. In this example, a user can deposit a package at the port, which is operably connected to the storage grid 510 such that the package can be immediately stored in the storage grid, and later retrieved for classification. In other words, the returns point 530 may be located at the storage grid 510 itself so that packages received at the returns point are immediately stored in the storage grid 510 upon receipt.

In another particular example, the returns point may be located at or near to the classifier so that a user can effectively deposit a package for immediate classification before the package is sent to the storage grid for temporary storage. In other words, the returns point 530 may be located at the classifier 540 itself so that packages received at the returns point are immediately classified before being sent downstream (to temporary storage, manual inspection or downstream processing components).

In some embodiments, the system 500 further comprises a manual inspection station 540 that is operably connected to one or both of the storage grid 510 and the classifier 520, so that packages can be conveyed between the manual inspection station 540 and the storage grid 510 or the classifier 540. The manual inspection station is an area designed for manual inspection of packages received by the storage system. For example, as described in more detail below, packages may be classified as requiring manual inspection, such as by a human customer services operative, if the classifier is unable to conclusively determine whether the package should be accepted or not. Packages that are classified as such may be sent immediately to the manual inspection station 540 directly from the classifier 520, or may be returned to the storage grid 510 for temporary storage until such a time that a customer services operative is available to carry out the manual inspection. At the manual inspection station, the customer services operative by manually inspect the package by opening it to access and inspect its contents. Following the manual inspection, the customer services operative may input a classification (e.g., acceptable returns or unacceptable returns) via a suitable user interface located at or near the manual inspection station 540, before the package is conveyed back to the storage grid for temporary storage (described in more detail below).

In some embodiments the system 500 may be operably connected to any number of downstream processing components 550. In general, a downstream processing component is any part of a supply chain that is downstream of the automated storage and retrieval system 500 in the package supply chain. For example, in the context of a returned order supply chain, packages are classified and optionally temporarily stored in the storage grid 510 of the system 500 before the packages are transported downstream to a permanent storage location, to scrap or to any other part of a supply chain that would be apparent to the skilled person. The downstream processing component(s) 550 may include different components for different classes of package. For instance, packages that are classified (by classifier 520) as accepted returns may be transported to permanent storage, or returned to the original retailer. By contrast, packages that are classified as unaccepted returns may be returned to the sender or disposed of. Thus, the downstream processing components connected to the system 500 can include multiple different downstream parts of the returns supply chain, each configured for processing packages of different classes.

In general, the downstream processing component(s) 550 are operably connected to any of the storage grid 510, the classifier 520 and the manual inspection station 540, so that packages can be transported downstream in the supply chain at any suitable time as described in more detail below. For example, packages may be transported by any suitable conveying means to a downstream processing component immediately following classification by the classifier, or immediately following inspection at the manual inspection station 540. Alternatively, packages may be transported downstream at any later time following temporary storage in the storage grid as described in more detail below. For example, the storage grid 510 may include peripheral systems such as ports or lifts that are suitable for conveying packages from the storage grid to the downstream processing components. In some examples, the downstream processing component may involve external shipping, in which case packages can be transported, by suitable conveying means, from the storage grid to a shipping container, or delivery van, or lorry, or the like.

### Operation of the storage and retrieval system

A returns workflow will now be described with reference to the system 500 of Fig 5 and the connecting numbered arrows illustrated in Fig. 5.

At a first stage of the returns workflow, a package is received at the returns point 530. The returns point may be at or at least operably connected to either or both of the storage grid 510 and the classifier 520. Following receipt of the package at the returns point 530, the workflow either follows a path indicated by arrow 1 in which the package is sent to the storage grid 510 for temporary storage (until such a time that the classifier is available for classifying as described below), or the workflow follows a path indicated by arrow 2 in which the package bypasses temporary storage and is instead sent directly to the classifier 520 for classification.

If the returns workflow follows the first path (indicated by arrow 1) in which the package is temporarily stored in the storage grid 510, the returns workflow will then proceed according to arrow 3, whereby at a later time after the package has been temporarily stored in the storage grid 510, the package is retrieved and sent to the classifier 520 for classification.

In more detail, any packages that are sent directly for temporary storage prior to classification may be assigned a "pending" status that indicates that the package is pending classification. In other words, the pending status indicates that the package has not yet been assigned a class by the classifier system before it is stored in the storage grid 510. The "pending" status may be recorded at the returns point 530 by marking an order identifier associated with the package with the "pending" status in an order tracking system.

At a later time, i.e., a time after the package has been temporarily stored in the storage grid 510, the package is retrieved from storage and sent (e.g., via suitable conveying means) to the classifier 520. The time at which the package is sent to the classifier may be a predetermined scheduled time. For example, at regular intervals (e.g., once a day, once an hour, or any other suitable regular interval), all packages assigned a "pending" status in an order tracking system may be retrieved from the grid and sent to the classifier for classification. Alternatively, the time at which the package is sent may be determined according to when a threshold number of packages assigned a "pending" status are stored in the storage grid 510. In other words, when a threshold number of "pending" packages is reached this may trigger the system to retrieve all pending packages from the storage grid and send them for classification. In yet another alternative, all packages that are sent to the storage grid with a "pending" status may be queued for classification, such that the storage grid acts as a temporary storage for a queue of pending packages. In this example, a package may be retrieved from the storage grid at an appropriate time corresponding to the package's position in the classification queue. In other words, a package may be retrieved from storage and sent to the classifier in response to a request or trigger indicating that the classifier is available for classifying the package.

Upon receipt of the package by the classifier (either sent directly from the returns point according to path 2 or retrieved from the storage grid according to paths 1 and 3), the package is classified by the classifier 520 based on its contents as described above. In more detail, the classifier assigns a class to the package, optionally by assigning the class to an order identifier associated with the package in an order tracking system. The package may be assigned a class indicating that the returns are acceptable, or a class indicating that the returns are unacceptable, or a class indicating that the package requires further inspection (e.g., manual inspection by a human operative). In some embodiments, the classifier may only classify packages as either an acceptable return or as requiring manual inspection. In other words, in some examples, a package may only be classified as unacceptable after it has been manually inspected.

Depending on the class assigned to the package, the workflow for the package may follow one or more different paths as described below.

### Acceptable returns

If the package has been assigned a class indicating that it is an acceptable return, the workflow may proceed in one of two ways. In a first option, the workflow for the package follows a path indicated by arrow 4, in which the package is sent (for the first time if received at the classifier directly from the returns point) or returned (if the package had originally arrived at the classifier from the storage grid) to the storage grid 510 for temporary storage until a later time at which the package is sent (according to the path indicated by arrow 7) for further downstream processing. In other words, the package may be temporarily stored in the storage grid until a later time at which it is retrieved from the storage grid and sent downstream for further processing (e.g., the package is transported to a permanent storage location).

In general, the time at which the package is retrieved from the storage grid 510 and sent according to the path indicated by arrow 7 to the downstream processing component(s) 550 may be a predetermined scheduled time. For example, at regular intervals (e.g., once a day, once an hour, or any other suitable regular interval), all packages stored in the storage grid 510 that have been classified as acceptable returns (e.g. in an order tracking system) may be retrieved from the grid and sent to the downstream processing component(s) 550. Alternatively, the time at which the packages are sent may be determined according to when a threshold number of packages have been classified as acceptable returns and stored in the storage grid 510. In other words, when a threshold number of acceptable returns is reached, this may trigger the system 500 to retrieve all packages classified as acceptable returns from the storage grid 510 and transport them (using suitable conveying means) to the downstream processing component(s). In yet another alternative, all packages that are classified as acceptable returns that are temporarily stored in the storage grid 510 may be queued for downstream processing, such that the storage grid acts as a temporary storage for a queue of packages awaiting further processing. In this example, one or more packages may be retrieved from the storage grid at an appropriate time corresponding to the packages' respective position in the queue. In other words, one or more packages classified as unacceptable returns may be retrieved from storage and sent to the downstream processing component in response to a request or trigger indicating that the downstream processing component is available for processing the one or more packages.

In an alternative option, the workflow for the package follows a path indicated by arrow 6, in which the package is sent directly from the classifier 520 to the downstream processing component 550, thereby bypassing temporary storage in the storage grid 510. Temporary storage in the storage grid 510 may be bypassed in this manner in the event that the downstream processing component 550 is available and ready to receive the package for processing. For example, downstream processing may require external shipping of the package to an external storage location. In the event that, at the time of classification, a vehicle for transporting the package to the external storage location is present and ready to receive the package, the package may be sent directly from the classifier 520 to the vehicle by appropriate conveying means. However, if at the time of classification, the vehicle is not present or ready to receive the package, the package may be temporarily stored in the storage grid 510 until such a time that the vehicle is present and ready to receive the package.

In this way, returned packages can be automatically classified as acceptable returns by the classifier 520 if the package meets the necessary criteria. Such packages are then automatically stored in temporary storage and subsequently retrieved and forwarded for downstream processing at the appropriate time, optimising the resources required for processing those returned packages.

### Unacceptable returns

The workflow described above in relation to acceptable returns may equally apply to any packages that have been classified as unacceptable returns. In particular, packages that have been assigned a class indicating they are unacceptable returns may be temporarily stored in the storage grid (following the path indicated by arrow 4) prior to being sent for downstream processing (following the path indicated by arrow 7). Alternatively, the packages can be sent directly from the classifier to the downstream processing component(s) 550 (following the path indicated by arrow 6).

In general, for packages classified as unacceptable returns that are temporarily stored in the storage grid 510, the time at which those packages are retrieved from the storage grid 510 and sent according to the path indicated by arrow 7 to the downstream processing component(s) 550 may be a predetermined scheduled time. For example, at regular intervals (e.g., once a day, once an hour, or any other suitable regular interval), all packages stored in the storage grid 510 that have been classified as unacceptable returns (e.g. in an order tracking system) may be retrieved from the grid and sent to the downstream processing component(s) 550. Alternatively, the time at which the packages are sent may be determined according to when a threshold number of packages have been classified as unacceptable returns and stored in the storage grid 510. In other words, when a threshold number of unacceptable returns is reached, this may trigger the system 500 to retrieve all packages classified as unacceptable returns from the storage grid 510 and transport them (using suitable conveying means) to the downstream processing component(s). In yet another alternative, all packages that are classified as unacceptable returns that are temporarily stored in the storage grid 510 may be queued for downstream processing, such that the storage grid acts as a temporary storage for a queue of packages awaiting further processing. In this example, one or more packages may be retrieved from the storage grid at an appropriate time corresponding to the packages' respective position in the queue. In other words, one or more packages classified as unacceptable returns may be retrieved from storage and sent to the downstream processing component in response to a request or trigger indicating that the downstream processing component is available for processing the one or more packages.

In this way, returned packages can be automatically classified as unacceptable returns by the classifier 520 if the package meets the necessary criteria. Such packages are then automatically stored in temporary storage and subsequently retrieved and forwarded for downstream processing at the appropriate time, optimising the resources required for processing those returned packages.

### Manual Inspection

If the package has been assigned a class indicating that it requires manual inspection, the workflow may proceed in one or two ways. As with packages classified as acceptable or unacceptable returns, in a first option, the workflow for a package classified as requiring manual inspection follows a path indicated by arrow 4, in which the package is sent (for the first time if received at the classifier directly from the returns point) or returned (if the package had originally arrived at the classifier from the storage grid) to the storage grid 510 for temporary storage until a later time at which the package is sent (according to the path indicated by arrow 8) to the manual inspection station 540. In other words, the package may be temporarily stored in the storage grid until a later time at which it is retrieved from the storage grid and sent to the manual inspection station 540.

In general, the time at which the package is retrieved from the storage grid 510 and sent according to the path indicated by arrow 8 to the manual inspection station may be a predetermined scheduled time. For example, at regular intervals (e.g., once a day, once an hour, or any other suitable regular interval), all packages stored in the storage grid 510 that have been classified for manual inspection (e.g. in an order tracking system) may be retrieved from the grid and sent to the manual inspection station 540. Alternatively, the time at which the packages are sent may be determined according to when a threshold number of packages have been classified for manual inspection and stored in the storage grid 510. In other words, when a threshold number of packages requiring manual inspection is reached, this may trigger the system 500 to retrieve all packages classified as requiring manual inspection from the storage grid 510 and transport them (using suitable conveying means) to the manual inspection station 540. In yet another alternative, all packages that require manual inspection that are temporarily stored in the storage grid 510 may be queued for manual inspection, such that the storage grid acts as a temporary storage for a queue of packages awaiting manual inspection. In this example, one or more packages may be retrieved from the storage grid at an appropriate time corresponding to the packages' respective position in the queue. In other words, one or more packages classified as requiring manual inspection may be retrieved from storage grid 510 and sent to the manual inspection station 540 in response to a request or trigger indicating that the manual inspection station (or an operative manning the manual inspection station) is available for processing the one or more packages.

In an alternative option, the workflow for the package follows a path indicated by arrow 5, in which the package is sent directly from the classifier 520 to the manual inspection station, thereby bypassing temporary storage in the storage grid 510. Temporary storage in the storage grid 510 may be bypassed in this manner in the event that the manual inspection station is available and ready to receive the package for processing. For example, this may occur when, at the time of classification, a human operative is available to carry out the manual inspection station and thus queuing or buffering the package is not required. However, if at the time of classification, there is no human resource available to carry out the manual inspection, the package may be temporarily stored in the storage grid until such a time that an operative is available to carry out the manual inspection.

Following manual inspection, packages may either be reclassified as acceptable or unacceptable returns by the operative carrying out the manual inspection. For example, the operative may provide an input into a user interface at the manual inspection to reclassify the package based on the manual inspection of the package and the goods contained therein. Once the packages have been classified as acceptable or unacceptable, the workflow may proceed in substantially the same manner as described above. That is, the packages may be sent (back) to the storage grid 510 for temporary storage (following the path indicated by arrow 9) until such a time that the package can be sent (along path indicated by arrow 7) for downstream processing. Alternatively, the packages may be sent directly from the manual inspection station 540 to the downstream processing component 550 (following the path indicated by arrow 10) if the downstream processing component is available at the time of the reclassification of the package.

In this way, any packages that cannot be automatically classified as acceptable or unacceptable can nonetheless be manually inspected and subsequently classified, before those packages can be automatically stored in temporary storage and subsequently retrieved and forwarded for downstream processing at the appropriate time, optimising the resources required for processing those returned packages.

### Method of operation

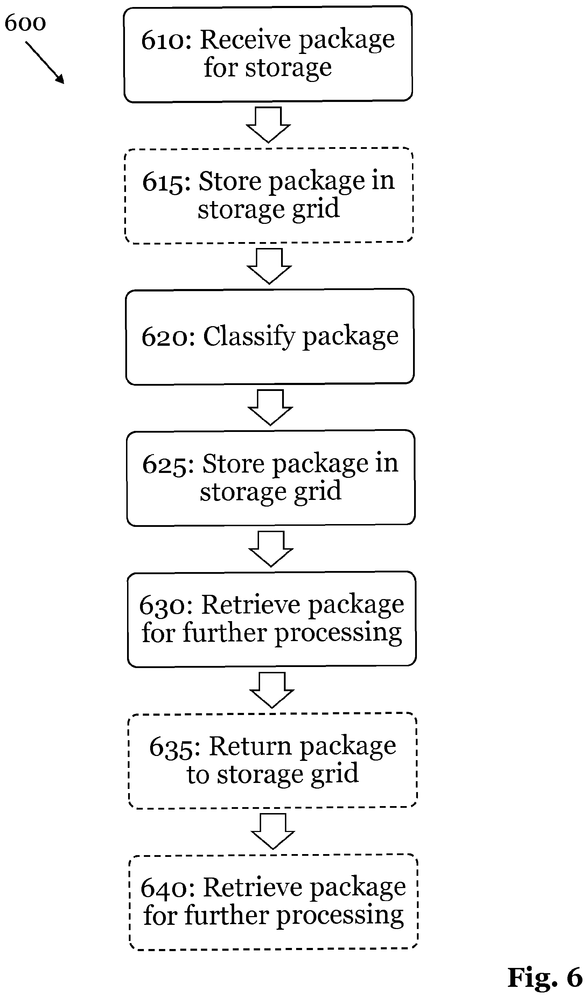

With reference to Fig. 6, a flowchart of a method 600 of operation of the automated storage and retrieval system 500 is shown. The method comprises a first step 610 of receiving one or more packages (for example, received at a returns point 530 as described above). The packages may be part of a returned order and may be received from a customer or any other entity external to the system 500. The following description of the method 600 is made with reference to a single package, however it would be appreciated that this method may apply to one or more packages, that is, any number of packages may be processed according to method 600 at substantially the same time.

Upon receipt of the passage at step 610, the package may initially be stored in the storage grid 510 of the system 500 prior to classification according to optional step 615 (i.e. following the workflow path indicated by arrow 1 in Fig. 5). This may for example be if the classifier is unavailable at the time the package is received at step 610, or for any other suitable reason that the package is not to be classified by the classifier 520 straight away. As such, the package may optionally be transported (by suitable conveying means) to the storage grid 510 for temporary storage. If step 615 takes place, the package may be assigned a "pending" status in a suitable order tracking system, to indicate that the package has been received by the system 500 but is pending classification.

Following receipt of the package and optionally at a time after the package has been temporarily stored according to step 615, the package is transported to the classifier 520 (e.g., by any suitable conveying means) for classification. If step 615 is omitted, the package is transported (if the classifier is separate to the returns point) directly to the classifier 520 from the returns point 530 (i.e., following the workflow path indicated by arrow 2). Alternatively, in some embodiments, the classifier 520 and returns point 530 may be substantially located at the same place in the system 500 such that upon receipt of the package, it can be classified by the classifier. If step 615 takes place, the package is retrieved from the storage grid and transported by suitable conveying means to the classifier (i.e., following the workflow path indicated by arrow 3). The method then proceeds to step 620 at which the package is classified in the manner described in detail above using the classifier 520 of the system 500.

After the package has been classified at step 620, the method proceeds to step 625 at which the package is sent (or returned) to the storage grid 510 for temporary storage (i.e., following the workflow path indicated by arrow 4), until such a time that the package can be retrieved for further processing. In the more detail, the package is sent from the classifier 520 to the storage grid 510 using any suitable conveying means that would be apparent to the skilled person and conventional to use in the context of the automated storage and retrieval system.

At a time after the package has been assigned a class and temporarily stored in the storage grid according to steps 620 and 625, the package is retrieved from the storage grid for further processing according to step 630. For instance, if the package has been classified as an acceptable return, the package may be retrieved at a time that corresponds to availability of a downstream processing component 550 arranged to handle acceptable returns. If the package has been classified as an unacceptable return, the package may be retrieved at a time that corresponds to availability of a downstream processing component 550 arranged to handle unacceptable returns. If the package has been classified as requiring manual inspection, the package may be retrieved at a time that corresponds to availability of a manual inspection station 540. In general, at step 630, packages classified as acceptable or unacceptable returns follow the workflow path indicated by arrow 7 in Fig. 5. Packages classified for manual inspection follow the workflow path indicated by arrow 8 in Fig. 5.

In general, step 630 may involve retrieving any number of packages that have been temporarily stored in the storage grid that have been assigned a particular class. In more detail, at a first time, any number of packages assigned the same class out of: acceptable returns; unacceptable returns; and manual inspection required; may be retrieved from the storage grid. The first time at which those packages are retrieved may be determined according any one or more of: a predetermined scheduled time, when a threshold number of packages have been assigned the particular class; receiving an indication that a downstream processing component is ready to receive packages assigned with the first class type; and receiving an external request for the one or more packages assigned with the particular class type.

Similarly, any number of packages assigned to the remaining class types may be retrieved from temporary storage at respective second and third times which are determined in a similar manner and as described in more detail above. For example, if at the first time, packages classified as acceptable returns are retrieved, then at the second time, packages classified as unacceptable returns may be retrieved whilst at the third time packages classified as requiring manual inspection may be retrieved. In other words, any number of packages assigned with different classes may be retrieved at different times, where those different times generally correspond to a schedule or availability associated with the different respective downstream processing elements designated for handling the packages of the different classes.

In general, step 630 involves retrieving one or more packages from the storage grid and delivering those packages to a periphery of the storage grid, for example to a port or to any other interface located at the periphery of the grid. The periphery of the grid to which the package is delivered at step 630 may itself include the downstream processing component for that package, or the periphery may interface with suitable conveying means configured to transport the package to the suitable downstream processing component. In general, packages of different classes may be delivered to different respective peripheries of the grid. For instance, packages classified as acceptable returns may be delivered to a first periphery whereby they can be transported to an external permanent storage location. Packages classified as unacceptable returns may be delivered to a second periphery whereby they are manually processed by human operatives. Packages classified for manual inspection may be delivered to a third periphery that contains or transports packages to the manual inspection station.

As described above, packages classified as requiring manual inspection may be temporarily stored in the storage grid 510 before being retrieved and sent to a manual inspection station. This may occur if, for example, at the time of classification at step 620, a human operative is not available for perform the manual inspection. If any packages assigned as requiring manual inspection are temporarily stored in the storage grid, step 630 may involve retrieving those packages and transporting them to the manual inspection station 540 at the appropriate time (following the workflow path indicated by arrow 8 as described above) Following manual inspection and reclassification (as acceptable or unacceptable, based on the manual inspection) those packages are optionally returned to the storage grid for temporary storage until such a time that they can be retrieved for further processing (. Since those packages that have been manually inspected will be reclassified as acceptable and unacceptable returns, they can be processed in the manner described above for acceptable or unacceptable returns). As such, the method 600 optionally comprises additional steps 635 and 640 shown in Fig. 6. At step 635, any packages that have been sent for manual inspection at step 630 are returned to the grid for temporary storage following manual inspection and reclassification (following the workflow path indicated by arrow 9 in Fig. 5). At step 640 those reclassified and temporarily stored packages are retrieved for further processing in the same manner as described above with respect to step 630 for acceptable and unacceptable returns (following the workflow path indicated by arrow 7).

The workflow depicted in Fig. 5 and the method depicted in Fig. 6 therefore provide a means for efficiently handling high volumes of packages, for example in a returns workflow. In particular, the provision of the automated storage and retrieval system that functions as temporary or "buffer" storage minimises the downtime of each component within the returns workflow and optimises resource usage, in particular the human resource element.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. For example, whilst the examples described herein relate to a returns workflow, the skilled person would appreciate that the disclosed systems and methods may equally apply to any other package-handling workflow. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. An automated storage and retrieval system comprising:
a storage grid for storing one or more packages;
a classifier system configured to classify the one or more packages based on their respective contents; and
conveying means for:
retrieving the one or more packages stored in the storage grid and delivering the one or more packages to the classifier system; and/or
sending the one or more packages from the classifier system to the storage grid for storage in the storage grid.

2. The automated storage and retrieval system of claim 1, wherein the classifier system comprises scanning means configured to scan a package and identifying means configured to identify the contents of the package based on one or more scans of the package provided by the scanning means.

3. The automated storage and retrieval system of claim 2, wherein the identifying means comprises an automated object recognition tool configured to identify the contents of the package.

4. The automated storage and retrieval system of any preceding claim, wherein the classifier system is configured to classify a package by assigning one or more classes to the package based on the package's contents.

5. The automated storage and retrieval system of claim 4, wherein the one or more classes belong to a set of classes including at least the following classes:
acceptable returns;
manual inspection required; and
unacceptable returns.

6. The automated storage and retrieval system of any preceding claim, wherein the system is configured to:
receive one or more packages for storage in the storage grid;
temporarily store the one or more packages in the storage grid;
retrieve, using the conveying means, the one or packages from the storage grid and deliver the one or more packages to the classifier system;
assign, using the classifier system, a class to each of the one or more packages based on their respective contents; and
return, using the conveying means, the one or more packages to the storage grid for temporary storage.

7. The automated storage and retrieval system of claim 6, wherein the system is configured to assign a pending status to the one or more packages received for storage in the storage grid prior to the initial temporary storage in the storage grid, wherein the pending status indicates that the one or more packages have not yet been assigned a class by the classifier system.

8. The automated storage and retrieval system of claim 7, wherein the system is configured to retrieve the one or more packages assigned a pending status from the storage grid and deliver the one or more packages to the classifier system at a time determined by any one or more of the following:
a predetermined scheduled time;
when a threshold number of packages have been assigned a pending status;
upon receiving an indication that the classifier system is ready to receive packages assigned with a pending status; and
receiving a request for the one or more packages assigned with a pending status.

9. The automated storage and retrieval system of any of claims 1 to 5, wherein the system is configured to:
receive one or more packages for storage in the storage grid;
prior to storing the one or more packages in the storage grid, assign, using the classifier system, a class to each of the one or more packages based on their contents; and
send, using the conveying means, the one or more packages to the storage grid for temporary storage.

10. The automated storage and retrieval system of any of claims 6 to 9, wherein the system is further configured to:
retrieve, at a first time after the one or more packages have been assigned a class and temporarily stored in the storage grid, any of the one or more packages that have been assigned a first class type out of a set of classes including:
acceptable returns;
manual inspection required; and
unacceptable returns; and
deliver the any one or more packages that have been assigned a first class type to a periphery of the storage grid;
wherein the first time is determined by any one or more of the following:
a predetermined scheduled time;
when a threshold number of packages have been assigned the first class type;
receiving an indication that a downstream package processing component is ready to receive packages assigned with the first class type; and
receiving an external request for the one or more packages assigned with the first class type.

11. The automated storage and retrieval system of claim 10, wherein the system is further configured to:
retrieve, at a second time after the one or more packages have been assigned a class and temporarily stored in the storage grid, any of the one or more packages that have been assigned a second class type out of a set of classes including:
acceptable returns;
manual inspection required; and
unacceptable returns;
wherein the second class type is different from the first class type; and
deliver the any one or more packages that have been assigned a second class type to a periphery of the storage grid;
wherein the second time is determined by any one or more of the following:
a predetermined scheduled time;
when a threshold number of packages have been assigned the second class type;
receiving an indication that a downstream package processing component is ready to receive packages assigned with the second class type; and
receiving an external request for the one or more packages assigned with the second class type.

12. The automated storage and retrieval system of claim 11, wherein the system is further configured to:
retrieve, at a third time after the one or more packages have been assigned a class and temporarily stored in the storage grid, any of the one or more packages that have been assigned a third class type, wherein the third class type is one of:
acceptable returns;
manual inspection required; and
unacceptable returns; and
wherein the third class type is different from the first and second class type; and
deliver the any one or more packages that have been assigned a third class type to a periphery of the storage grid,
wherein the third time is determined by any one or more of the following:
a predetermined scheduled time;
when a threshold number of packages have been assigned the third class type;
receiving an indication that a downstream package processing component is ready to receive packages assigned with the third class type; and
receiving an external request for the one or more packages assigned with the third class type.

13. A method for processing one or more packages using an automated storage and retrieval system according to any preceding claim, the method comprising:
receiving one or more packages for storage in the storage grid;
assign, using the classifier system, a class to each of the one or more packages based on their respective contents; and
store the one or more packages in the storage grid.

14. The method of claim 13, wherein prior to assigning a class to each of the one or more packages, the method comprises:
assigning a pending status to the one or more packages;
sending the one or more packages for temporary storage in the storage grid;
retrieving the one or more packages from the storage grid; and
delivering the one or more packages to the classifier system;
wherein the retrieval of the packages from the storage grid takes place at a time determined by any one or more of the following:
a predetermined scheduled time;
when a threshold number of packages have been assigned a pending status;
upon receiving an indication that the classifier system is ready to receive packages assigned with a pending status; and
receiving a request for the one or more packages assigned with a pending status.

15. The method of claim 13 or 14, wherein the method comprises:
retrieving, at a time after the one or more packages have been assigned a class and stored in the storage grid, any of the one or more packages that have been assigned a first class type, wherein the first class type is one of:
acceptable returns;
manual inspection required; and
unacceptable returns; and
delivering the any one or more packages that have been assigned the first class type to a periphery of the storage grid,
wherein the time at which the packages assigned the first class type are retrieved is determined by any one or more of the following:
a predetermined scheduled time;
when a threshold number of packages have been assigned the first class type;
receiving an indication that a downstream package processing component is ready to receive packages assigned with the first class type; and
receiving an external request for the one or more packages assigned with the first class type.
